# EUROPÄISCHE PATENTSCHRIFT

(11) **EP 2 676 547 B1**
(45) Veröffentlichungstag und Bekanntmachung des Hinweises auf die Patenterteilung: **29.12.2021**
(21) Anmeldenummer: 13002997.8
(22) Anmeldetag: 12.06.2013
(51) Int. Cl.: A22C 13/00

(54) **Schlauchförmige Nahrungsmittelhülle auf Basis von Biopolymeren mit Innenimprägnierung, sowie Verfahren zu ihrer Herstellung**
Tubular foodstuff casing based on biopolymers with internal impregnation, as well as method for its manufacture
Boyau tubulaire de produit alimentaire à base de biopolymères avec imprégnation intérieure, ainsi que methode pour sa fabrication

(30) Priorität: 22.06.2012 DE 102012012484
(43) Veröffentlichungstag der Anmeldung: 25.12.2013
(73) Patentinhaber: Kalle GmbH, 65203 Wiesbaden (DE)
(72) Erfinder: Pohl, Matthias, Dr., 61476 Kronberg i.Ts. (DE); Michaelis, Nico, 65795 Hattersheim (DE)
(74) Vertreter: Plate, Jürgen

(56) Entgegenhaltungen:
- EP-A1- 0 453 925
- DE-A1- 4 233 884
- DE-A1- 4 303 835
- DE-A1-102004 022 974
- DE-A1-102010 012 633

## Beschreibung

Die Erfindung betrifft eine schlauchförmige Nahrungsmittelhülle auf Basis von Biopolymeren, die auf der Innenseite eine Imprägnierung aufweist, mit der sich die Haftung der Hülle an dem Nahrungsmittel einstellen läßt. Die Hülle ist insbesondere vorgesehen als künstliche Wursthülle.

Ein wichtiges Merkmal bei Nahrungsmittelhüllen, speziell bei Wursthüllen, ist ihre Schälbarkeit. Die Hüllen sollen ausreichend fest an dem Nahrungsmittel haften, damit sich zwischen der Hülle und der Oberfläche des Nahrungsmittels kein Fett ansammeln kann. Sie sollen jedoch auch nicht zu fest haften, damit sie abgeschält werden können, ohne dabei Bestandteile der Nahrungsmitteloberfläche herauszureißen. Die Haftung hängt dabei stark ab von der Art des Lebensmittels bzw. der Wurstsorte. So haftet z.B. Blutwurst besonders stark an der Hülle. Einen Einfluss auf die Haftung hat daneben auch die Art des Reifungsprozesses (Dauer der Reifung, Temperatur und Luftfeuchte bei der Reifung). Wichtig ist auch das Material der Hülle (regenerierte Cellulose, Kollagen, thermoplastische Stärke usw.), gegebenenfalls mit einer Verstärkung aus Faserpapier, Vlies oder Textil.

Im Stand der Technik ist eine Vielzahl von Imprägnierungen und Beschichtungen beschrieben für die verschiedenen Wursttypen und Hüilentypen. Die Imprägnierungen enthalten dabei Haftkomponenten, Trennkomponenten oder eine Kombination von beiden. So sollen Hüllen für Dauerwurst während der gesamten Herstelldauer ausreichend fest an dem Wurstbrät haften und dabei auch einen genügenden Schrumpf aufweisen damit sich keine Falten bilden. Für diesen Zweck haben sich reaktive wie auch nicht-reaktive Haftkomponenten als wirksam erwiesen. Als nicht-reaktive Haftkomponenten geeignet sind beispielsweise Gelatine, Casein oder Chitosan. Die Wirkung der nicht-reaktiven Haftkomponenten kann verstärkt werden, wenn diese mit mindestens bifunktionellen Reagenzien, wie Glyoxal oder Glutardialdehyd, mit der Oberfläche der Hülle vernetzt werden.

Als reaktive Haftkomponenten wurden Polyamid-Polyamin-Epichlorhydrin-Harze (DE 14 92 708) und Harnstoff/- oder Melamin/Formaldehyd-Harze (EP 0 883 308; US 3,378,379) verwendet. Beschrieben wurden auch synergistisch wirkende Kombinationen von reaktiven und nicht-reaktiven Haftkomponenten (EP 0 883 308, EP 2 140 765).

Die Imprägnierung mit Haftkomponenten kann zu einem unerwünschten Verkleben der Innenseiten der schlauchförmigen Hülle führen. Dies kann durch die Zugabe von natürlichen oder synthetischen Ölen oder von Fettsäuren, insbesondere solchen mit einer Kettenlänge von 4 bis 10 C-Atomen, vermindert oder unterdrückt werden.

Um das Abziehen der Hülle nach dem Ende des Reifungsprozesses zu erleichtern, wurden verschiedene Trennkomponenten beschrieben, mit denen die Innenseite der Hülle imprägniert wird. Auch hier läßt sich zwischen reaktiven und nicht-reaktiven Komponenten unterscheiden.

Zu den nicht-reaktiven Trennkomponenten zählen ionische und nicht-ionische Polysaccharide und Polysaccharid-Derivate, insbesondere Cellulose, Celluloseether (Methylcellulose, Hydroxyethylcellulose, Carboxymethylcellulose usw.), Alginsäure bzw. Alginate (EP 0 502 431), Stärke und Stärkeether (EP 0 006 551). In diese Kategorie gehören auch Phosphogylceride und fluorierte Polymere, wie Polytetrafluorethylen (EP 0 635 213).

Reaktive Schälkomponenten sind durch kovalente Bindungen mit dem Material der Hülle verbunden. Als besonders wirksame Schälkomponenten haben sich trivalente Chromfettsäurekomplexe erwiesen (US 2,901,358) und Dialkylketene mit langkettigen Alkylsubstituenten (DE 14 92 699).

Die Wirkung der reaktiven und nicht-reaktiven Trennkomponenten kann durch Kombination mit natürlichen oder synthetischen Ölen (wie Paraffinöl, Silikonöl oder MCT-ÖI), Fetten bzw. Fettsäuren oder Wachsen (wie Montanwachs, Bienenwachs oder Carnaubawachs) noch verbessert werden (EP 0 180 207, DE 22 27 438, DE 34 47 026).

In der DE 43 03 835 A1 ist eine schlauchförmige Nahrungsmittelhülle auf Basis von Cellulose, Regenerat-Cellulose oder anderen Polysacchariden, wie Stärke oder Alginat, oder Proteinen offenbart. Die Hülle weist auf der Außen- oder Innenseite eine Lackierung bzw. Beschichtung auf, die eine Wachskomponente und ein copolymeres Bindemittel umfaßt. Zur Beschichtung wird eine bevorzugt wäßrige Lösung, Emulsion oder Dispersion eingesetzt. Beim Trocknen und Erhitzen der Beschichtung mit Hilfe von Heißluft entsteht eine Mehrschicht-Struktur mit dem Wachs als Wasserdampf-Sperrschicht an der freien Oberfläche und dem Copolymer als Sauerstoff-Barriere auf dem Cellulose-Untergrund, Wird die Lackierung auf der Innenseite aufgebracht, so leistet das Wachs einen Beitrag zur Haftung zwischen Brät und Hülle.

Auch Innenimprägnierungen mit einer Kombination von Trenn- und Haftkomponenten sind bekannt. So ist beispielsweise in der EP 0 676 143 (= US 5,595,796) eine Kombination von (i) einem natürlichen Eiweiß, einem Aminoplast-Vorkondensat oder einem Polyamin/Polyamid/Epichlorhydrin-Harz und (ii) einem Chromfettsäure-Komplex oder einem Alkylketen-Dimer offenbart. Eine Kombination von Celluloseether und reaktivem Harz, wie Polyamin/Polyamid/Epichlorhydrin-Harz oder einem Melamin/Formaldehyd-Harz, ist in der DE 28 53 269 beschrieben. Gegenstand der EP 1 732 393 ist eine Wursthülle mit minimaler Bräthaftung, die auf der Innenseite mit einer Kombination aus einem Chromfettsäure-Komplex, einem Wachs, einem Poiyamin/Polyamid/Epichlorhydrin-Harz, einem Eiweiß und/oder einem Alkylketen-Dimer imprägniert ist. Das Dokument DE 10 2004 022974 A1 offenbart eine Nahrungsmittelhülle, die auf der dem Nahrungsmittel zugewandten Seite eine Imprägnierung aufweist, die Polyvinylalkohol, Polyvinylamin, Polyvinylpyrrolidone, Polyurethane und/oder Polystyrol umfasst. Diese Polymere können auch modifiziert sein.

Trotz der Vielzahl der bisher vorgeschlagenen Innenimprägnierungen wurde bis heute keine wirklich zufriedenstellende Lösung gefunden, die allen Anforderungen gerecht wird. So zeigen Blutwürste, Rohwürste und Wursttypen aus besonders magerem Fleisch eine sehr starke Haftung an Hüllen aus Biopolymeren, insbesondere an Hüllen auf Basis von Cellulose. Die abgeschälte Hülle zeigt dann häufig unerwünschte Anhaftungen von Wurstbrät. Bei Nahrungsmitteln mit besonders geringer Haftung an der Hülle können die Schälkomponenten andererseits ein unerwünschtes Ablösen der Hülle bewirken. In dem dabei entstehenden Zwischenraum kommt es dann leicht zur Schimmelbildung. Reaktive Schälkomponenten, wie Alkylketen-Dimere, benötigen zudem eine relativ lange Zeitspanne um mit der Oberfläche der Hülle aus den Biopolymeren zu reagieren. Die Zeitspanne wird zudem durch Temperatur und pH-Wert stark beeinflußt.

Nicht-reaktive Trennkomponenten, wie Celluloseether, werden zudem bei Wässern der Hüllen leicht herausgelöst. Das führt später zu einer ungenügenden oder ungleichmäßigen Haftung der Hülle. Anionische Polyelektrolyte, wie Carboxymethylcellulose und Alginate, bilden sehr leicht Komplexe mit zweiwertigen Ionen, wie Ca ²⁺ oder Mg ²⁺, die aus dem Nahrungsmittel stammen. Diese Komplexe können dann unerwünschte gelartige Ablagerungen auf der Oberfläche des Nahrungsmittels bilden. Viele reaktive Haftkomponenten, aber auch viele Celluloseether, können die Innenseiten der Hülle miteinander verkleben, was den Füllvorgang erheblich stört.

Es bestand daher die Aufgabe, die geschilderten Nachteile zu vermeiden und Nahrungsmittelhülle auf Basis von Biopolymeren so auszurüsten, dass sie eine ausreichende, aber nicht zu starke Haftung zeigen. Die Hafteigenschaften sollen sich zudem gezielt einstellen lassen. Auch soll die Imprägnierung bei einem Wässern der Hülle vor dem Füllen nicht ausgewaschen werden.

Gelöst wurde die Aufgabe mit einer Innenimprägnierung, die spezielle, hydrophobierend wirkende, synthetische, organische Polymere als wesentlichen Bestandteil enthält. Vorzugsweise weisen die Polymere Gruppen auf, die mit den Biopolymeren der Nahrungsmittelhülle ionische und/oder kovalente Bindungen eingehen können.

Gegenstand der vorliegenden Erfindung ist demgemäß eine Nahrungsmittelhülle auf Basis von Biopolymeren, die auf der dem Nahrungsmittel zugewandten Seite eine Imprägnierung aufweist, dadurch gekennzeichnet, dass die Imprägnierung aus mindestens einem hydrophoben, synthetischen, organischen Polymer ausgewählt aus der Gruppe bestehend aus Polystyrol, Styrol/(Meth)acrylat-Copolymeren, Styrol/Maleinat-Copolymeren, Styrol/Butadien-Copolymeren, Polyurethanen, Polyacrylnitrilen, Polyisopren, Polyacrylamid, Poly(meth)acrylaten, Polyvinylpyrrolidon, Polyvinylidenchlorid, EthylenNinylacetat-Copolymeren, Polyvinylacetat, Polyvinylalkohol und gegebenenfalls N-substituierten Polyvinylaminen, wobei die hydrophobierenden Polymere jeweils mit kationischen, anionischen oder amphiphilen Gruppen modifiziert sind und kombiniert sind mit anionischen oder kationischen Promotern, entsprechend der Ladung der hydrophobierenden Polymere, die Imprägnierung 0,1 bis 3,0 g/m² an hydrophobierenden Polymeren aufweist und der Anteil der Promoter 0,1 bis 4,0 Gew.-% beträgt, bezogen auf das Gewicht der hydrophoben Polymere.

In einer bevorzugten Ausführungsform sind die genannten (Co)Polymere jeweils mit kationischen, anionischen oder amphiphilen Gruppen modifiziert. Das sind beispielsweise Ammoniumgruppen, Carboxy- bzw. Carboxylatgruppen oder Sulfonsäuregruppen. Unter dem Begriff "Copolymer" sollen demgemäß im Zusammenhang mit der vorliegenden Erfindung auch Polymere aus mehr als 2 verschiedenen Polymereinheiten verstanden werden.

Die in den Polyvinylaminen gegebenenfalls vorhandenen Substituenten sind vorzugsweise Alkylgruppen oder Acylgruppen.

Bevorzugte kationisch modifizierte (Co)Polymere enthalten quaternäre Ammoniumgruppen mit einem Ladungsäquivalent von 400 bis 1500 g/eq. N⁺.

Bevorzugte anionisch modifizierte (Co)Polymere enthalten Carboxylat- oder Sulfonsäuregruppen mit einem Ladungsäquivalent von 400 bis 4000 g/eq. COO- oder SO₃⁻.

Unter dem Begriff "Biopolymere" sollen im Zusammenhang mit der vorliegenden Erfindung Polysaccharide, Proteine sowie Gemische davon verstanden werden. Das sind insbesondere Cellulose, Stärke, Alginsäure, Polymilchsäure, Kollagen, Gelatine sowie Derivate davon, wie Stärkeacetat.

Die Nahrungsmittelhülle auf Basis von Biopolymeren weist gegebenenfalls eine Faserverstärkung auf, beispielsweise aus einem Textilmaterial, einem Vlies oder einem Faserpapier. Eine besonders bevorzugte Faserverstärkung besteht aus einem Papier aus Hanf- oder Abaca-Fasern. Die Faserverstärkung ist allgemein vollständig eingebettet in eine Matrix aus den Biopolymeren, bildet also nicht die innere Oberfläche der Hülle. Eine Verstärkung aus Faserpapier, eingebettet in eine Matrix aus regenerierter oder gefällter Cellulose, ist in den lange bekannten "Cellulose-Faserdärmen" enthalten. Das Faserpapier hat allgemein ein Gewicht von 15 bis 31 g/m², bevorzugt von 18 bis 29 g/m². Verstärkungen aus Textil oder Vlies können auch ein höheres Gewicht aufweisen, beispielsweise haben sie ein Gewicht von 15 bis 60 g/m², bevorzugt von 20 bis 50 g/m². Die Verstärkungen aus Textil oder Vlies können ebenfalls aus Biopolymeren bestehen, beispielsweise aus Naturfasern, wie Baumwolle oder Seide. Sie können auch aus Fasern aus synthetischen Kunststoffen bestehen, beispielsweise aus Polyesterfasern oder Polyamidfasern. Sie können auch aus Mischungen von Naturfasern und Kunststofffasern bestehen.

Die erfindungsgemäße Nahrungsmittelhülle ist bevorzugt schlauchförmig, besonders bevorzugt nahtlos schlauchförmig. In einer besonderen Ausführungsform wird eine Faserverstärkung zu einem Schlauch mit überlappenden Längskanten geformt und dann von innen, von außen oder von beiden Seiten mit einer Lösung des Biopolymers oder eines Derivats des Biopolymers durchgehend und lückenlos beschichtet. Auch eine solche Hülle wird als nahtlos bezeichnet.

Die hydrophoben, synthetischen, organischen Polymere umfassen vorzugsweise Polymereinheiten aus Styrol, Styrol-Derivaten, (Meth)acrylsäure, (Meth)acrylsäure-(C1-C18)alkylestern, Maleinsäureanhydrid, Butadien, Vinylpyrrolidon, Vinylalkohol, Vinylacetat, Vinylether oder aus verschiedenen der genannten Monomere. Es kann sich demgemäß um Homo- oder Copolymere handeln, wobei unter "Copolymeren" auch solche mit mehr als zwei verschiedenen Monomereinheiten verstanden werden sollen. "(Meth)acrylsäure" steht dabei für "Acrylsäure und/oder Methacrylsäure". Entsprechendes gilt für "(Meth)acrylat" usw. Besonders geeignet sind beispielsweise Styrol/Acrylat-Copolymere, Styrol/Butadien-Copolymere, Styrol/Maleinsäureanhydrid-Copolymere, Polyvinylpyrrolidon und Polyurethane. Die erfindungsgemäß zu verwendenden Polymere lassen sich in einem weiten pH-Bereich verarbeiten, sie besitzen eine hohe Elektrolyt-Toleranz und haben allgemein auch ein gutes Filmbildungsvermögen.

In einer besonderen Ausführungsform weisen die Polymere Monomereinheiten mit ionischen Gruppen auf, beispielsweise quartäre Ammoniumgruppen oder Sulfogruppen. Geeignete Monomereinheiten leiten sich beispielsweise ab von (3-trimethylammonio-propyl)-methacrylat oder (1-Methyl-1-sulfo-ethyl)-methacrylamid. Die ionischen Gruppen bewirken eine zusätzliche ionische Bindung mit den Biopolymeren der Hülle. Diese weisen Hydroxygruppen (z.B. in Polysacchariden), Carboxygruppen (z.B. in Alginsäure/Alginat), Amidgruppen (z.B. in Proteinen) und andere funktionelle Gruppen auf. Maleinsäureanhydrid- oder Isocyanat-gruppen können mit Hydroxygruppen der Biopolymere reagieren, wobei kovalente Bindungen entstehen. Durch die ionischen und/oder kovalenten Bindungen wird ein Auswaschen der hydrophobierenden Polymere verhindert.

Durch die Modifikation der Anteile der einzelnen Monomere und/oder durch Variation der Substituenten in den Monomereinheiten läßt sich der Grad der Hydrophobisierung und damit die Adhäsionseigenschaften der Hülle über einen weiten Bereich einstellen und an das jeweilige Nahrungsmittel anpassen. Je höher beispielsweise der Anteil der Styrol-Einheiten ist, um so hydrophober und damit leichter schälbar ist die Hülle. Auch durch die Länge der Alkylgruppen in den (Meth)acrylsäure-alkylester-Einheiten lassen sich die Adhäsionseigenschaften einstellen. Je länger derAlkylrest, desto wirksamer ist die Hydrophobisierung der Oberfläche. Bei Hüllen, die für fettreiche Nahrungsmittel vorgesehen sind, können Polymere oder Copolymere mit hydrophilen Gruppen die Schälbarkeit deutlich verbessern. Hydrophile Gruppen sind insbesondere quaternäre Ammoniumgruppen oder carboxylierte oder sulfatierte Gruppen. In Hüllen für fettarme Nahrungsmittel sind dagegen Styrol/(Meth)acrylat-Copolymere mit einem erhöhten Anteil an Styrolmonomeren eher geeignet.

Die in der vorliegenden Erfindung verwendeten hydrophobierenden Polymere entfalten sofort ihre volle Wirkung, die Hüllen können dementsprechend direkt verwendet werden. Im Gegensatz dazu müssen mit Alkylketen-Dimeren imprägnierte Hüllen erst für eine längere Zeit gelagert werden, bis sich die volle Wirkung einstellt.

Geeignete hydrophobierend wirkende Polymere sind beispielsweise unter der Bezeichnung ^{®}Polygraphix (anionische, amphotere oder kationische Dispersionen von Kemira), ^{®}Phobolan B (Styrol/Acrylat-Copolymere von Cebra Chemie GmbH), ^{®}Perglutine (anionische, amphotere oder kationische Styrol/(Meth)acrylat-Copolymere von BK Giulini), ^{®}PVP/VA (Ashland Specialty Ingredients) oder ^{®}Aquacoat (Synthomer) erhältlich.

Die hydrophobierenden Polymere sind kombiniert mit anionischen oder kationischen Promotern, entsprechend der Ladung der hydrophobierenden Polymere. Dann ziehen die hydrophobierenden Polymere besser auf die Hüllenoberfläche auf und sind zudem fester verankert, was zudem deren Wirkungsgrad verbessert. Geeignete kationische Promoter sind beispielsweise Polyethylenimine, Chitosan, kationische Stärke, Polyvinylamine oder Poly(diallyl-dimethyl-ammoniumchlorid) (PolyDADMAC); geeignete anionische Promoter sind insbesondere Carboxymethylcellulose, Polyacrylsäure, Alginat oder Pektine. Der Anteil dieser Promoter beträgt allgemein 0,1 bis 4,0 Gew.-%, bevorzugt 0,2 bis 2,0 Gew.-%, jeweils bezogen auf das Gewicht der hydrophobierenden Polymere.

Schlauchförmige Wursthüllen auf Basis von Cellulosehydrat, die auf der Außenseite eine Beschichtung aus Polyacrylaten oder Copolymeren mit Acrylat-Einheiten aufweisen, sind aus der EP 1 036 502 bekannt. Die Beschichtung dient zur Verminderung der Durchlässigkeit der Hülle für Wasserdampf und Sauerstoff, damit sie auch für Leberwurst verwendbar ist. Die Verwendung der Polymere in einer lnnenbeschichtung zur Einstellung der Hafteigenschaften ist nicht nahegelegt, in der EP-Schrift wird vielmehr empfohlen, die Innenseite nicht zu imprägnieren oder zu beschichten.

In geringen Konzentrationen (<0,1 g/m², bis 4 Gew.-% bezogen auf Feststoffgehalt der hydrophobierenden Polymere) dient CMC als Promoter für eine bessere Retention an die Biopolymeroberfläche. In größeren Konzentrationen beeinflusst es die Schälbarkeit der Hülle bis hin zu einem "Easy-Peel" Effekt.

Aufgebracht werden die hydrophobierenden, synthetischen, organischen Polymere zweckmäßig in Form von wäßrigen Lösungen oder wäßrigen Dispersionen. Die Dispersionen können einen Feststoffgehalt von bis zu 50 Gew.-%, bezogen auf ihr Gesamtgewicht, aufweisen. Zweckmäßig beträgt der Anteil der hydrophobisierenden Polymere in der Lösung bzw. Dispersion 1 bis 40 Gew.-%, bevorzugt 10 bis 40 Gew.-%, jeweils bezogen auf das Gesamtgewicht der Lösung bzw. Dispersion. Die dispergierten Polymer-Partikel besitzen allgemein einen sehr geringen mittleren Durchmesser von vorzugsweise weniger als 0,05 µm. Die Partikel können daher besser und gleichmäßiger auf die Hülle aus den Biopolymeren aufziehen.

Die Lösung oder Dispersion wird auf die Innenseite der schlauchförmigen Nahrungsmittelhülle vorzugsweise durch ein sogenanntes Bubble-coating- oder Slugcoating-Verfahren aufgebracht. Dabei wird Lösung bzw. Dispersion in einer ständig sich neu bildenden Schlaufe durch die gesamte Hülle hindurchgeführt. Danach wir die Hülle getrocknet, zweckmäßig im aufgeblasenen Zustand mit Heißluft und/oder InfrarotStrahlung.

Die Imprägnierung zur Einstellung der Schäleigenschaften weist allgemein 0,1 bis 3,0 g/m², bevorzugt 0,4 bis 1,5 g/m², an hydrophobierenden Polymeren auf. Die Menge an hydrophobierenden Polymeren ist in jedem Fall so bemessen, dass sie auch durch ein mehrstündiges Wässern nicht herausgelöst werden. Ein dabei verwendetes, zunächst vollständig klares Wasser zeigt nach 2-stündiger Wässerung eine Trübung von weniger als 5 NTU.

Das ist deutlich weniger als in der als Gas-Barriere vorgesehenen Außenbeschichtung der Leberwursthülle gemäß der EP 1 036 502. Dort hat die Außenbeschichtung eine Dicke von 3 bis 10 µm, entsprechend etwa 3 bis 10 g/m². Die Imprägnierung gemäß der vorliegenden Erfindung bildet zudem keine durchgehende Schicht auf der Innenseite, die dispergierten Polymerpartikel dringen vielmehr in die Poren der aus Biopolymeren gebildeten Hülle ein.

Zusätzlich zu der Innenimprägnierung kann die erfindungsgemäße Hülle auch auf der Außenseite beschichtet oder imprägniert sein. Durch die Imprägnierung auf der Außenseite läßt sich, je nach deren Zusammensetzung, beispielsweise die Resistenz der Hülle gegen cellulytisch wirkende Enzyme (Cellulasen), wie sie von Edelschimmelpilzen gebildet werden, vermindern oder die Rauhigkeit der Außenseite erhöhen.

In einer besonderen, nicht erfindungsgemäßen Ausführungsform werden die genannten hydrophoben, synthetischen organischen Polymere in die Beschichtungsviskose eindosiert. Bei "doppelviskosierten" Cellulose-Faserdärmen werden sie vorzugsweise mit der zum Beschichten der Innenseite der zum Schlauch geformten Faserverstärkung vermischt. Nach der Regeneration sind sie dann fest in der Cellulosehydrat-Matrix verankert. Zu der Viskose wird zweckmäßig eine wäßrige Lösung und/oder Dispersion der Polymere gegeben, so wie sie auch zur Innenimprägnierung benutzt wird. Im Vergleich zur Innenimprägnierung ist der Gewichtsanteil an hydrophoben Polymeren pro Flächeneinheit der Hülle erhöht, damit eine ausreichende Menge davon auf der Innenseite zur Einstellung der Schäleigenschaften vorhanden ist. Der Anteil an hydrophobierend wirkenden Polymeren beträgt zweckmäßig etwa 5 bis 40 Gew.-%, bevorzugt 10 bis 20 Gew.-%, jeweils bezogen auf das Trockengewicht der regenerierten Cellulose.

Die nachfolgenden Beispiele dienen zur Illustration der Erfindung. Prozente sind darin als Gewichtsprozente zu verstehen, soweit nicht anders angegeben oder aus dem Zusammenhang unmittelbar ersichtlich. Die Schäleigenschaften der Hüllen wurden mit Noten von 0 bis 4 bewertet, wobei 0 für "praktisch keine Haftung" und 1 für "sehr leicht schälbar" steht; 4 bedeutet eine sehr starke Haftung. Der Grad der Haftung der hydrophobierenden Polymere wurde anhand der Trübung des zum Wässern der Hüllen eingesetzten Wassers ermittelt. Die Hüllen wurden dabei 2 Stunden lang in klares Wasser eingelegt, danach wurde die Trübung des Wassers gemessen. Die Messung erfolgte gemäß DIN ISO 7027 unter Verwendung eines Formazin-Standards. Ein Trübungswert von 5 bis 50 NTU bedeutet ein leicht trübes Wasser, Werte von über 50 NTU ein deutlich trübes Wasser (NTU = Nephelometric Turbidity Unit). Bei Hüllen mit Imprägnierungen aus nicht-reaktiven Schälkomponenten, wie CMC, Wachs- oder Öldispersionen, zeigte das Wasser nach 1 Stunde einen Trübungswert von bis zu 43 NTU.

### Beispiel 1 (nicht erfindungsgemäß):

Ein außenviskosierter Cellulose-Faserdarm mit einem Nennkaliber von 65 mm wurde nach der Weichmacherkufe (diese enthielt eine wäßrige Glycerinlösung) auf der Innenseite durch Bubble-Coating mit 10 Litern einer wäßrigen Lösung der folgenden Zusammensetzung imprägniert:
- 1,0 l: einer Dispersion, die 39 % eines Styrol/Acrylsäureester-Copolymers (^{®}Phobolan B, Cebra Chemie GmbH) in Wasser enthält, bezogen auf das Gewicht der Dispersion,
- 0,4 l: Glycerin und
- 8,6 l: vollentsalztes Wasser (VE-Wasser).

Der imprägnierte Geldarm passierte danach ein Quetschwalzenpaar. Anschließend wurde er aufgeblasen, in aufgeblasener Form in einem Heißluft-Trockner getrocknet und zu Rollen aufgewickelt. Die Rollenware wurde danach zu Raupen konfektioniert. Die Raupen wurden 2 Stunden lang mit klarem Wasser gewässert. Das Wasser zeigte nach den 2 Stunden einen Trübungswert von 4 NTU, was praktisch klares Wasser bedeutet. Es waren also so gut wie keine Bestandteile aus der Hülle herausgelöst worden, die eine Trübung verursachen könnten.

Die Menge an Copolymer betrug 0,2 g pro Quadratmeter der Hülle.

Danach wurden die Hüllen auf einer automatischen Füllmaschine mit Fleischwurstbrät gefüllt. Die Würste wurden gegart, auf 4 °C Kerntemperatur abgekühlt und eingefroren. Im Anschluss daran wurden die Würste (mit Hülle) in Scheiben geschnitten. Die Hülle blieb dabei an den einzelnen Scheiben haften. Bei Verwendung einer Hülle mit einer üblichen Haftimprägnierung (Eiweiß oder Gelatine) war dagegen bei 23 % der Wurstscheiben die Hülle teilweise oder vollständig abgelöst.

Bei einer Testschälung mit der Hand wurden die Schäleigenschaften mit der Note 3 beurteilt.

### Beispiel 2 (nicht erfindungsgemäß):

Ein Cellulose-Faserdarm, wie im Beispiel 1 beschrieben, wurde nach Durchlaufen der Weichmacherkufe (diese enthielt eine wäßrige Glycerin-Lösung) auf der Innenseite mit einer wäßrigen Dispersion der folgenden Zusammensetzung imprägniert:
- 1,7 l: einer Dispersion, die 19 % eines kationischen Styrol/Acrylat-Copolymers (^{®}Perglutin K418, BK Giulini GmbH) in Wasser enthält,
- 0,5 l: Glycerin und
- 7,8 l: VE-Wasser.

Wie im Beispiel 1 beschrieben wurde der Cellulose-Faserdarm dann getrocknet und konfektioniert. Die Hülle war mit 0,3 g/m² des kationischen Styrol/Acrylat-Copolymers imprägniert.

Er wurde dann in gleicher Weise mit Fleischwurstbrät gefüllt und die Würste wurden gegart. Das zum Wässern der Faserdärme verwendete Wasser zeigte nach 2 Stunden Wässern eine Trübung von 3 NTU, was klarem Wasser entspricht. Es waren also keine Bestandteile herausgelöst worden, die eine Trübung verursachen könnten.

Nach dem Abkühlen der Würste auf eine Kerntemperatur von 4 °C wurden die Würste dann gefroren.

Die Hülle ließ sich problemlos abziehen, die Schäleigenschaften wurden mit der Note 1 bewertet. Die Oberfläche des Wurstbräts blieb dabei unbeschädigt.

Bei Verwendung einer gleichartigen Hülle ohne Innenimprägnierung blieb die Hülle dagegen am Brät haften und es wurden Teile aus des Wurstbräts herausgerissen.

### Beispiel 3:

Ein doppelviskosierter (= von innen und von außen viskosierter) Cellulose-Faserdarm mit einem Nennkaliber von 50 mm wurde wie im Beispiel 1 beschrieben auf der Innenseite imprägniert mit 10 Litern einer wäßrigen Dispersion der folgenden Zusammensetzung:
- 2,5 l: einer 24 %igen Dispersion eines amphoteren Styrol/Acrylat-Copolymers (^{®}Perglutin 450/280, BK Giulini GmbH) in Wasser,
- 0,5 l: Glycerin,
- 1,5 l: einer 16 %igen Dispersion eines Polyamid/Polyamin/Epichlorhydrin-Harzes in Wasser und
- 5,5 l: VE-Wasser.

Die weitere Verarbeitung erfolgte wie im Beispiel 1 beschrieben. Die Hülle war mit 0,5 g/m² des amphoteren Styrol/Acrylat-Copolymers und 0,2 g/m² des Polyamid/Polyamin/Epichlorhydrin-Harzes imprägniert. Sie wurde jedoch nicht zu Raupen gerafft sondern zu 50 cm langen Abschnitten konfektioniert. Diese wurden 1,5 h lang gewässert und anschließend mit Salamibrät gefüllt. Das zum Wässern verwendete Wasser blieb dabei klar (4 NTU nach dem Herausnehmen der gewässerten Hüllen). Nach einer mehrwöchigen Reifung unter optimalen Bedingungen zeigte die Hülle eine minimale Bräthaftung, sie hatte sich jedoch nicht abgelöst. Sie ließ sich leicht abziehen ohne dabei die Brätoberfläche zu beschädigen (Schälnote: 1,5).

### Beispiel 4 (nicht erfindungsgemäß):

Ein doppelviskosierter Cellulose-Faserdarm vom Nennkaliber 50 mm wurde, wie im Beispiel 1 beschrieben, auf der Innenseite mit 10 Litern einer wäßrigen Dispersion der folgenden Zusammensetzung imprägniert:
- 3,0 l: einer 19 %igen Dispersion eines kationischen Acrylat-Copolymers (^{®}Perglutin K418, BK Giulini GmbH) in Wasser,
- 0,5 l: Glycerin und
- 6,5 l: VE-Wasser

Nach dem Trocknen wurde die imprägnierte Hülle zu Abschnitten mit einer Länge von jeweils 1,3 m konfektioniert. Diese waren innen mit 0,6 g/m² des kationischen Acrylat-Copolymers imprägniert. Die Abschnitte wurden 1,5 Stunden lang gewässert und anschließend mit Peperoni-Brät gefüllt. Die Würste wurden auf eine Kerntemperatur von 54 °C erhitzt, dann abgekühlt, geräuchert und 2 Wochen lang gereift.

Nach der Reifedauerwurde die Hülle mit Hilfe von Druckluft abgeschält. Dazu wurde so viel Druckluft zwischen Hülle und Brätoberfläche gegeben, dass sich die Hülle vom Brät löste ohne dabei zu platzen und sich leicht abziehen ließ.

Die Haftung der Hülle am Brät war sehr gering; kurz vor dem Ende der Reifeperiode begann sie sich bereits abzulösen (Schälnote: 0). Es hatte sich kein Schimmel gebildet zwischen der Hülle und der Brät-Oberfläche.

### Beispiel 5:

Ein beidseitig viskosierter Cellulose-Faserdarm mit einem Nennkaliber von 110 mm wurde auf der Innenseite mit 20 Litern einer wäßrigen Dispersion der folgenden Zusammensetzung imprägniert:
- 5,0 l: einer 39 %igen Dispersion eines Styrol/Acrylat-Copolymers (^{®}Phobolan B, Cebra Chemie GmbH) in Wasser,
- 1,0 l: Glycerin,
- 3,0 l: einer 7,6 %igen wäßrigen ^{®}Aquapel-Suspension und
- 11,0 l: VE-Wasser.

Nach dem Trocknen wurde der imprägnierte Cellulose-Faserdarm (0,97g Styrol/Acrylat-Copolymer pro Quadratmeter) zu Raupen konfektioniert. Diese wurden vor dem Füllen 2 Stunden lang mit klarem Wasser gewässert um sie geschmeidiger zu machen. Im Anschluß daran wurden die Hüllen mit Fleisch (mager) für Kochschinken gefüllt. Nach dem Kochen ließ sich die Hülle problemlos von dem Fleisch abziehen (Schälnote: 1). Eine gleichartige, nicht innenimprägnierte Hülle zeigte demgegenüber eine sehr viel stärkere Haftung an dem Fleisch (Schälnote: 2,5).

### Beispiel 6 (nicht erfindungsgemäß):

Ein außenviskosierter Cellulose-Faserdarm mit einem Nennkaliber von 60 mm wurde, wie im Beispiel 1 beschrieben, auf der Innenseite mit 10 l einer wäßrigen Dispersion der folgenden Zusammensetzung imprägniert:
- 2,0 l: einer 52 %igen Dispersion eines anionischen Styrol/Butadien-Copolymers (^{®}Aquacoat 100, Synthomer GmbH) in Wasser,
- 0,5 l: Glycerin und
- 7,5 l: VE-Wasser

Nach dem Trocknen wurde die Hülle zu Abschnitten von jeweils 50 cm Länge konfektioniert, gewässert und anschließend mit Halbdauerware (Bierwurst) gefüllt. Die Abschnitte waren mit 1,1 g/m² des anionischen Styrol/Butadien-Copolymers imprägniert. Das zum Wässern verwendete Wasser blieb klar (4 NTU).

Beim Reifen der Wurst wurde kein Abstellen der Hülle beobachtet. Die Schäleigenschaften wurden mit 2 bewertet. Ein gleichartiger, jedoch nicht innenimprägnierter Cellulose-Faserdarm zeigte demgegenüber eine ungleichmäßige Bräthaftung (Schälnote: 1,5 bis 2,5).

## Patentansprüche

1. Nahrungsmittelhülle auf Basis von Biopolymeren, die auf der dem Nahrungsmittel zugewandten Seite eine Imprägnierung aufweist, **dadurch gekennzeichnet, dass** die Imprägnierung aus mindestens einem hydrophoben, synthetischen, organischen Polymer ausgewählt aus der Gruppe bestehend aus Polystyrol, Styrol/(Meth)acrylat-Copolymeren, Styrol/Maleinat-Copolymeren, Styrol/Butadien-Copolymeren, Polyurethanen, Polyacrylnitrilen, Polyisopren, Polyacrylamid, Poly(meth)acrylaten, Polyvinylpyrrolidon, Polyvinylidenchlorid, EthylenNinylacetat-Copolymeren, Polyvinylacetat, Polyvinylalkohol und gegebenenfalls N-substituierten Polyvinylaminen, sowie anionischen oder kationischen Promotern, entsprechend der Ladung der hydrophobierenden Polymere, besteht, wobei die hydrophobierenden Polymere jeweils mit kationischen, anionischen oder amphiphilen Gruppen modifiziert sind, die Imprägnierung 0,1 bis 3,0 g/m² an hydrophobierenden Polymeren aufweist und der Anteil der Promoter 0,1 bis 4,0 Gew.-% beträgt, bezogen auf das Gewicht der hydrophoben Polymere.

2. Nahrungmittelhülle gemäß Anspruch 1, **dadurch gekennzeichnet, dass** das Biopolymer ein Polysaccharid, ein Polysaccharid-Derivat, ein Protein, ein ProteinDerivat oder eine Mischung davon ist.

3. Nahrungsmittelhülle gemäß Anspruch 2, **dadurch gekennzeichnet, dass** das Polysaccharid Cellulose, Stärke oder ein Stärkederivat und/oder Alginsäure umfaßt.

4. Nahrungsmittelhülle gemäß Anspruch 2, **dadurch gekennzeichnet, dass** das Protein Kollagen, Gelatine und/oder Derivate davon umfaßt.

5. Nahrungsmittelhülle gemäß einem oder mehreren der Ansprüche 1 bis 4, **dadurch gekennzeichnet, dass** sie eine Faserverstärkung aufweist, bevorzugt eine Faserverstärkung aus einem Textilmaterial, einem Vlies oder einem Faserpapier.

6. Nahrungsmittelhülle gemäß einem oder mehreren der Ansprüche 1 bis 5, **dadurch gekennzeichnet, dass** die kationisch modifizierten (Co)Polymere quaternäre Ammoniumgruppen mit einem Ladungsäquivalent von 400 bis 1500 g/eq. N⁺ enthalten.

7. Nahrungsmittelhülle gemäß einem oder mehreren der Ansprüche 1 bis 5, **dadurch gekennzeichnet, dass** die anionisch modifizierten (Co)Polymere Carboxylat- oder Sulfonsäuregruppen mit einem Ladungsäquivalent von 400 bis 4000 g/eq. COO- oder SO3⁻ enthalten.

8. Nahrungsmittelhülle gemäß einem oder mehreren der Ansprüche 1 bis 7, **dadurch gekennzeichnet, dass** das hydrophobierende Polymer ein modifiziertes Styrol/(Meth)acrylat-Copolymer umfaßt.

9. Nahrungsmittelhülle gemäß Anspruch 8, **dadurch gekennzeichnet, dass** das Polymer ein kationisches Styrol/Alkyl(meth)acrylat ist, wobei zumindest ein Teil der Alkylgruppen mit quaternären Ammoniumgruppen substituiert ist.

10. Nahrungsmittelhülle gemäß einem oder mehreren der Ansprüche 1 bis 9, **dadurch gekennzeichnet, dass** die anionischen oder kationischen Promoter Polyethylenimin, Chitosan, Polyvinylamin, kationischer Stärke, Poly(diallyl-dimethyl-ammoniumchlorid), Polyacrylsäure, Alginat, Pektin oder Carboxymethylcellulose sind.

11. Nahrungsmittelhülle gemäß einem oder mehreren der Ansprüche 1 bis 10, **dadurch gekennzeichnet, dass** die Imprägnierung zur Einstellung der Schäleigenschaften 0,4 bis 1,5 g/m² an hydrophobierenden Polymeren aufweist.

12. Nahrungsmittelhülle gemäß Anspruch 10, **dadurch gekennzeichnet, dass** der Anteil der Promoter 0,5 bis 2,0 Gew.-% beträgt, bezogen auf das Gewicht der hydrophobierenden Polymere.

13. Verfahren zur Herstellung einer Nahrungsmittelhülle gemäß einem oder mehreren der Ansprüche 1 bis 12, **dadurch gekennzeichnet, dass** es die folgenden Schritte umfaßt:
- Bereitstellen einer schlauchförmigen Hülle auf Basis von Biopolymeren,
- Bereitstellen einer wäßrigen Dispersion, die mindestens ein hydrophobes, synthetisches, organisches Polymer umfaßt, das ausgewählt ist aus der Gruppe bestehend aus Polystyrol, Styrol/(Meth)acrylat-Copolymeren, Styrol/Maleinat-Copolymeren, Styrol/Butadien-Copolymeren, Polyurethanen, Polyacrylnitrilen, Polyisopren, Polyacrylamid, Poly(meth)acrylaten, Polyvinylpyrrolidon, Polyvinylidenchlorid, Ethylen/Vinylacetat-Copolymeren, Polyvinylacetat, Polyvinylalkohol und gegebenenfalls N-substituierten Polyvinylaminen, wobei die hydrophobierenden Polymere jeweils mit kationischen, anionischen oder amphiphilen Gruppen modifiziert sind, und anionische oder kationische Promoter entsprechend der Ladung der hydrophobierenden Polymere, wobei die Promoter mit den modifizierten (Co)Polymeren kombiniert sind;
- Imprägnieren der Innenseite der schlauchförmigen Hülle mit der wäßrigen Dispersion durch Bubble-Coating und
- Trocknen der imprägnierten schlauchförmigen Hülle, bevorzugt im aufgeblasenen Zustand.

14. Verwendung der Nahrungsmittelhülle gemäß einem oder mehreren der Ansprüche 1 bis 12 als künstliche Wursthülle, bevorzugt für Rohwurst, Brüh- oder Kochwurst.

## Claims

1. Biopolymer-based food casing which has an impregnation on the side facing the food, **characterized in that** the impregnation is composed of at least one hydrophobic, synthetic, organic polymer selected from the group consisting of polystyrene, styrene/(meth)acrylate copolymers, styrene/maleate copolymers, styrene/butadiene copolymers, polyurethanes, polyacrylonitriles, polyisoprene, polyacrylamide, poly(meth)acrylates, polyvinylpyrrolidone, polyvinylidene chloride, ethylene/vinyl acetate copolymers, polyvinyl acetate, polyvinyl alcohol and optionally N-substituted polyvinylamines, and anionic or cationic promoters, corresponding to the charge of the hydrophobizing polymers, wherein the hydrophobizing polymers are in each case modified with cationic, anionic or amphiphilic groups, the impregnation comprises 0.1 to 3.0 g/m² of hydrophobizing polymers and the proportion of the promoters is 0.1 to 4.0 % by weight, based on the weight of the hydrophobic polymers.

2. Food casing according to Claim 1, **characterized in that** the biopolymer is a polysaccharide, a polysaccharide derivative, a protein, a protein derivative, or a mixture thereof.

3. Food casing according to Claim 2, **characterized in that** the polysaccharide comprises cellulose, starch or a starch derivative and/or alginic acid.

4. Food casing according to Claim 2, **characterized in that** the protein comprises collagen, gelatine and/or derivatives thereof.

5. Food casing according to one or more of Claims 1 to 4, **characterized in that** it has a fibre reinforcement, preferably a fibre reinforcement made of a textile material, a nonwoven, or a fibre paper.

6. Food casing according to one or more of Claims 1 to 5, **characterized in that** the cationically modified (co)polymers contain quaternary ammonium groups with a charge equivalent of 400 to 1500 g/eq. N⁺.

7. Food casing according to one or more of Claims 1 to 5, **characterized in that** the anionically modified (co)polymers contain carboxylate or sulfonic acid groups with a charge equivalent of 400 to 4000 g/eq. COO⁻ or SO3⁻.

8. Food casing according to one or more of Claims 1 to 7, **characterized in that** the hydrophobizing polymer comprises a modified styrene/(meth)acrylate copolymer.

9. Food casing according to Claim 8, **characterized in that** the polymer is a cationic styrene/alkyl (meth)acrylate, wherein at least some of the alkyl groups are substituted with quaternary ammonium groups.

10. Food casing according to one or more of Claims 1 to 9, **characterized in that** the anionic or cationic promoters are polyethyleneimine, chitosan, polyvinylamine, cationic starch, poly(diallyldimethylammonium chloride), polyacrylic acid, alginate, pectin or carboxymethyl cellulose.

11. Food casing according to one or more of Claims 1 to 10, **characterized in that** the impregnation for setting the peeling properties comprises 0.4 to 1.5 g/m² of hydrophobizing polymers.

12. Food casing according to Claim 10, **characterized in that** the proportion of the promoters is 0.5 to 2.0 % by weight, based on the weight of the hydrophobizing polymers.

13. Process for producing a food casing according to one or more of Claims 1 to 12, **characterized in that** it comprises the following steps:
- providing a biopolymer-based flexible-tube type casing,
- providing an aqueous dispersion which comprises at least one hydrophobic, synthetic, organic polymer selected from the group consisting of polystyrene, styrene/(meth)acrylate copolymers, styrene/maleate copolymers, styrene/butadiene copolymers, polyurethanes, polyacrylonitriles, polyisoprene, polyacrylamide, poly(meth)acrylates, polyvinylpyrrolidone, polyvinylidene chloride, ethylene/vinyl acetate copolymers, polyvinyl acetate, polyvinyl alcohol and optionally N-substituted polyvinylamines, wherein the hydrophobizing polymers are in each case modified with cationic, anionic or amphiphilic groups, and anionic or cationic promoters corresponding to the charge of the hydrophobizing polymers, wherein the promoters are combined with the modified (co)polymers;
- impregnating the inside of the flexible-tube type casing with the aqueous dispersion by bubble coating and
- drying the impregnated flexible-tube type casing, preferably in the inflated state.

14. Use of the food casing according to one or more of Claims 1 to 12 as an artificial sausage casing, preferably for raw sausage, scalded-emulsion sausage or cooked-meat sausage.

## Revendications

1. Enveloppe pour produits alimentaires à base de biopolymères, qui présente sur le côté orienté vers le produit alimentaire une imprégnation, **caractérisée en ce que** l'imprégnation consiste en au moins un polymère hydrophobe, synthétique, organique choisi parmi le groupe consistant en polystyrol, copolymères styrène/(méth)acrylate, copolymères styrène/maléinate, copolymères styrène/butadiène, polyuréthanes, polyacrylonitriles, polyisoprène, polyacrylamide, poly(méth)acrylates, polyvinylpyrrolidone, polychlorure de vinylidène, copolymères éthylène/acétate de vinyle, polyacétate de vinyle, alcool polyvinylique et le cas échéant polyvinylamines N-substituées, ainsi que de promoteurs anioniques ou cationiques, correspondant à la charge des polymères hydrophobes, dans laquelle les polymères hydrophobes sont modifiés respectivement par des groupes cationiques, anioniques ou amphiphiles, l'imprégnation allant de 0,1 à 3,0 g/m² présente des polymères hydrophobes et le pourcentage des promoteurs va de 0,1 à 4,0 % en poids, par rapport au poids des polymères hydrophobes.

2. Enveloppe pour produits alimentaires selon la revendication 1, **caractérisée en ce que** le biopolymère est un polysaccharide, un dérivé de polysaccharide, une protéine, un dérivé de protéine ou un mélange de ceux-ci.

3. Enveloppe pour produits alimentaires selon la revendication 2, **caractérisée en ce que** la cellulose polysaccharidique comprend de l'amidon ou un dérivé d'amidon et/ou de l'acide alginique.

4. Enveloppe pour produits alimentaires selon la revendication 2, **caractérisée en ce que** la protéine comprend du collagène, de la gélatine ou un dérivé de ceux-ci.

5. Enveloppe pour produits alimentaires selon l'une quelconque ou plusieurs des revendications 1 à 4, **caractérisée en ce qu'**elle présente un renforcement fibreux, de préférence un renforcement fibreux composé d'une matière textile, d'un non-tissé ou d'un papier à fibres.

6. Enveloppe pour produits alimentaires selon l'une quelconque ou plusieurs des revendications 1 à 5, **caractérisée en ce que** les (co)polymères modifiés par voie cationique contiennent des groupes ammonium quaternaire avec un équivalent en charge allant de 400 à 1500 g/éq. N⁺.

7. Enveloppe pour produits alimentaires selon l'une quelconque ou plusieurs des revendications 1 à 5, **caractérisée en ce que** les (co)polymères modifiés par voie anionique contiennent des groupes carboxylates ou d'acide sulfonique avec un équivalent en charge allant de 400 à 4 000 g/éq. COO⁻ ou SO3⁻.

8. Enveloppe pour produits alimentaires selon l'une quelconque ou plusieurs des revendications 1 à 7, **caractérisée en ce que** le polymère hydrophobe comprend un copolymère styrène/(méth)acrylate modifié.

9. Enveloppe pour produits alimentaires selon la revendication 8, **caractérisée en ce que** le polymère est un styrène/(méth)acrylate d'alkyle cationique, dans laquelle au moins une partie des groupes alkyle est substitué par des groupes ammonium quaternaire.

10. Enveloppe pour produits alimentaires selon l'une quelconque ou plusieurs des revendications 1 à 9, **caractérisée en ce que** les promoteurs anioniques ou cationiques sont polyéthylèneimine, chitosane, polyvinylamine, amidon cationique, poly(chlorure de diallyl-diméthylammonium), acide polyacrylique, alginate, pectine ou carboxyméthylcellulose.

11. Enveloppe pour produits alimentaires selon l'une quelconque ou plusieurs des revendications 1 à 10, **caractérisée en ce que** l'imprégnation présente pour l'ajustement des propriétés de pelage allant de 0,4 à 1,5 g/m² des polymères hydrophobes.

12. Enveloppe pour produits alimentaires selon la revendication 10, **caractérisée en ce que** le pourcentage des promoteurs va de 0,5 à 2,0 % en poids, par rapport au poids des polymères hydrophobes.

13. Procédé de fabrication d'une enveloppe pour produits alimentaires selon l'une quelconque ou plusieurs des revendications 1 à 12, **caractérisée en ce qu'**elle comprend les étapes suivantes :
- fourniture d'une enveloppe tubulaire à base de biopolymères,
- fourniture d'une dispersion aqueuse, qui comprend au moins un polymère hydrophobe, synthétique, organique, qui est choisi parmi le groupe consistant en polystyrol, copolymères styrène/(méth)acrylate, copolymères styrène/maléinate, copolymères styrène/butadiène, polyuréthanes, polyacrylonitriles, polyisoprène, polyacrylamide, poly(méth)acrylates, polyvinylpyrrolidone, polychlorure de vinylidène, copolymères éthylène/acétate de vinyle, polyacétate de vinyle, alcool polyvinylique et le cas échéant polyvinylamines N-substituées, dans laquelle les polymères hydrophobes sont modifiés respectivement par des groupes cationiques, anioniques ou amphiphiles, et les promoteurs anioniques ou cationiques correspondant à la charge des polymères hydrophobes, dans laquelle les promoteurs sont combinés aux (co)polymères modifiés ;
- imprégnation de la face intérieure de l'enveloppe tubulaire avec la dispersion aqueuse par revêtement à bulles et
- séchage de l'enveloppe tubulaire imprégnée, de préférence à l'état gonflé.

14. Utilisation de l'enveloppe pour produits alimentaires selon l'une quelconque ou plusieurs des revendications 1 à 12 en tant que boyau artificiel de saucisse, de préférence pour saucisse crue, saucisse cuite ou saucisse à bouillir.
